# EUROPÄISCHE PATENTSCHRIFT

(11) **EP 3 164 532 B1**
(45) Veröffentlichungstag und Bekanntmachung des Hinweises auf die Patenterteilung: **17.08.2022**
(21) Anmeldenummer: 15730687.9
(22) Anmeldetag: 03.06.2015
(51) Int. Cl.: D01B 3/02, D01G 31/00, G01N 21/85

(54) **VORRICHTUNG ZUM ERKENNEN UND AUSSCHEIDEN VON FREMDSTOFFEN IN ODER ZWISCHEN FASERMATERIAL BEI EINER SPINNEREIVORBEREITUNG ODER GINNEREI**
APPARATUS FOR DETECTING AND REMOVING FOREIGN MATTER IN AND FROM BETWEEN FIBER MATERIAL DURING A SPINNING PREPARATION OR GINNING
DISPOSITIF DE DÉTECTION ET DE SÉPARATION DE SUBSTANCES ÉTRANGÈRES DANS OU ENTRE UNE MATIÈRE FIBREUSE DANS UNE PRÉPARATION DE FILATURE OU UNE ÉGRENEUSE DE COTON

(30) Priorität: 02.07.2014 DE 102014009690
(43) Veröffentlichungstag der Anmeldung: 10.05.2017
(73) Patentinhaber: Trützschler Group SE, 41199 Mönchengladbach (DE)
(72) Erfinder: ENGELS, Guido, 41569 Rommerskirchen (DE)
(86) Internationale Anmeldenummer: PCT/EP2015/001128
(87) Internationale Veröffentlichungsnummer: WO 2016/000805

(56) Entgegenhaltungen:
- CN-U- 203 215 025
- DE-A1-102007 005 049
- DE-A1-102010 046 977
- JP-A- H1 113 935
- JP-A- H11 270 733
- JP-A- 2005 273 835

## Beschreibung

Die Erfindung betrifft eine Vorrichtung gemäß dem Oberbegriff des Anspruchs 1.

In der Praxis besteht eine wesentliche Anforderung an Fremdteilausscheider in Spinnereivorbereitungsmaschinen als auch in ähnlichen Maschinen im Ginprozess darin, dass die erkannten Fremdteile mit möglichst wenig Gutfaserverlust und sicher ausgeschieden werden müssen.

In solchen Fremdteilausscheidern wird das zu inspizierende Material, Baumwolle oder auch Chemiefasern, pneumatisch in einem Rechteckkanal gefördert und an der Erkennungssensorik, z. B. an Kamerasystemen, in einem Präsentationsraum vorbeigeführt. Anschließend erfolgt die Ausscheidung der erkannten Fremdteile z. B. über einen Blasbalken in einen Abfallraum. Innerhalb dieses Blasbalkens ist eine Reihe von Ausblasventilen angeordnet, welche selektiv über die Breite als auch im Zeitverhalten von der Erkennungsvorrichtung angesteuert werden können. Maßgebliche Parameter für eine sichere Ausscheidung sind hier die Anzahl der aktivierten Ventile, die nötige Verzögerungszeit und die Haltezeit.

Die Anzahl der aktivierten Ventile wird von der möglichen Querströmung des Materials von der Erkennungsstelle zur Ausscheidestelle bestimmt. Die Verzögerungszeit und die Haltezeit wird von der Geschwindigkeit der Fremdteile bestimmt. Hier ist insbesondere die unterschiedliche Geschwindigkeit der Fremdteile dafür verantwortlich, dass die Haltezeit oft groß gehalten muss, um die vorbei fliegenden Fremdteile sicher zu treffen.

Ein zweiter, die Ausscheideeffizienz beeinflussender Faktor ist, dass bei hoher Ventilanzahl und langer Haltezeit viel Luft in den Abfallraum befördert wird, welche zu einer Druckerhöhung in diesem und damit zu einer Rückströmung der Luft in den Förderkanal führt. Es besteht die Gefahr, dass bereits ausgeschiedene Fremdteile durch diese zurückströmende Luft wieder in den Förderkanal mitgerissen werden.

Beim Betrieb von Fremdfaser- oder Fremdteilausscheidern in Spinnereivorbereitungsmaschinen für Baumwolle oder Chemiefasern, werden Fremdteile z. B. durch optische Vorrichtungen erkannt und anschließend bevorzugt durch eine pneumatisch arbeitende Ausscheidevorrichtung aus dem Prozess entfernt.

Bei einer bekannten Vorrichtung (DE 10 2008 034 385 A) wird das Fasermaterial pneumatisch durch einen Schacht gefördert und dabei von ein oder mehreren Detektionsvorrichtungen inspiziert. Erkennen die Detektionsvorrichtungen Fremdteile oder Fremdfasern, so werden diese durch eine nachfolgende Ausscheidevorrichtung pneumatisch aus dem Kanal in einen Abfallbehälter ausgeschieden.

Diese Ausscheidevorrichtung kann z. B. aus einer Düsenleiste mit mehreren einzelnen ansteuerbaren Ventilen bestehen, welche durch einen kurzen gezielten Luftstoß die erkannten Fremdteile ausscheiden. Dabei werden bevorzugt immer nur diejenigen Ventile angesteuert, welche eine räumliche Überlappung zu der erwarteten weiteren Flugbahn der Fremdteile aufweisen.

Die Funktion dieses Ausscheidevorganges ist nicht überwacht, so dass die Steuerung der Maschine z. B. nicht merkt, wenn eine Fehlfunktion eines Ventils z. B. durch Verkleben vorliegt, so dass durch den Ausfall eines oder weniger Ventile die Ausscheidefunktion nicht mehr gewährleistet ist. Typische Fehlfunktionen können Blockieren und Verkleben der Ventile durch wasserhaltige, ölhaltige oder mit Fremdkörpern belastete Druckluft sein. Ein Ventil kann dabei dauernd geöffnet sein, welches einen hohen Druckluftverbrauch und eine hohe Abfallmenge an Gutfasermaterial erzeugt, oder aber das Ventil öffnet nicht mehr, so dass die Ausscheidefunktion nicht mehr gewährleistet ist. Solche Fehlfunktionen werden in der Regel erst bei der nächsten Wartung festgestellt, indem mithilfe einer Servicefunktion die Ventile einzeln angesprochen werden und damit die Funktion kontrolliert wird. Die Kontrolle erfolgt dabei aber nur sehr eingeschränkt, da z. B. die Durchflussmenge oder aber das Zeitverhalten des Ventils beim Öffnen oder Schließen nicht kontrolliert werden kann. In jedem Falle ist eine Kontrolle nur durch Außerbetriebnahme der Maschine möglich, da während dieser Kontrolle kein Materialfluss stattfinden darf.

Die DE 10 2007 005 049 A1 offenbart eine Vorrichtung in der Spinnereivorbereitung zum Abscheiden von Fremdstoffen an einer Fördereinrichtung für Fasermaterial, der mindestens eine Fremdstoff-Abscheideeinrichtung zugeordnet ist. Diese weist eine Einrichtung zur Erzeugung eines in Richtung auf die Fördereinrichtung verlaufenden und einen Luftstrom erzeugenden Blasluftstromes auf. Der Luftstrom löst die Fremdstoffe aus der Fördereinrichtung heraus. Die Vorrichtung weist eine Mehrzahl an Blasdüsen auf, die über die Breite der Fördereinrichtung angeordnet sowie an eine Druckluftleitung und an Ventile angeschlossen sind. Ferner ist ein Balken vorhanden, in den die Blasdüsen integriert sind.

Die JP 11013935 A offenbart ein Magnetventil-Betriebsüberwachungsgerät. Bei diesem ist das Innere eines Gehäuses lösbar ist mit dem Äußeren eines zu überwachenden Magnetventils verbunden und mit Passagen versehen, die mit einem Auslassanschluss des elektromagnetischen Ventils verbunden sind. Es ist ferner mit Druckerfassungselementen zum Erfassen des Druckausmaßes in den Passagen und zum Erzeugen eines dem Ausmaß entsprechenden Signals.

Die CN 203215025 U offenbart eine Einheit mit einer Magnetventil-Kontrollbox, sodass ein Gesamtsystem zentral gesteuert werden kann. Jede Magnetventilbox verfügt über eine Selbstdiagnosefunktionalität. Die Box ist dabei eine speicherprogrammierte Steuerung (PLC). Diagnoseinformation wird über einen DP-Bus zu einem Host-Gerät gesendet.

Die DE 10 2010 046 977 A1 offenbart eine Magnetventilantriebsschaltung mit einem Stromdetektor, um den durch eine Magnetspule fließenden Strom zu erfassen. Eine Änderungsrate des erfassten Stroms über die Zeit wird berechnet. Ferner gibt eine Haltestatusübergangsbestimmungseinheit, die einen Zeitpunkt eines Übergangs einer ersten zu einer zweiten Periode auf Basis der Änderungsrate bestimmt.

Die JP 11270733 A offenbart ein Magnetventil-Steuergerät mit einem Mikrofon zum Detektieren von Geräuschen, die von einem Ventilelement eines Magnetventils herrühren bzw. erzeugt werden, das im Betrieb gegen sein Inneres prallt. Ein Steuerschaltkreis erfasst den Betrieb des Magnetventils von einem Erfassungsausgang des Mikrofons und ist nahe dem Magnetventil angeordnet. Eine Mehrzahl an Magnetventilen ist vorgesehen, wobei eine Geräusch- oder Vibrationswellenform bzw. -frequenz jedes Magnetventils verschieden ist. Ein Betriebserfassungsmittel des Steuergeräts unterscheidet diese verschiedenen Wellenformen oder Frequenzen, und der Betrieb jedes Magnetventils wird individuell erfasst.

Die JP 2005273835 A offenbart ein Magnetventil, dem elektrische Energie zugeführt wird und das erregt wird, um einen bewegbaren Kern zu bewegen. Ferner ist ein Vibrationssensor eingebaut, um ein Ventilelement, das mit dem bewegbaren Kern zur Öffnungs-/Schließbewegung zusammenwirkt, zur Öffnungs-/Schließbewegung zu bringen. Die von der Ventilelementbewegung erzeugte Vibration wird erfasst, um die Kontrolle des Magnetventilantriebs praktikabel zu machen, um zu wissen, ob das Ventil die Öffnungs-/Schließbewegung durchgeführt oder nicht.

Der Erfindung liegt daher die Aufgabe, eine Vorrichtung der eingangs beschriebenen Art zu schaffen, die die genannten Nachteile vermeidet, die insbesondere auf einfache Art ermöglicht, eine Störung des Luftdurchflusses, z. B. eine Fehlfunktion eines Ventils, unmittelbar bereits während des Betriebes zu erkennen.

Die Lösung dieser Aufgabe erfolgt durch die kennzeichnenden Merkmale des Anspruchs 1. Die Unteransprüche haben vorteilhafte Weiterbildungen der Erfindung zum Inhalt.

Die Vorrichtung für eine Spinnereivorbereitungsmaschine oder eine Maschine im Ginprozess zum Erkennen und Ausscheiden von Fremdstoffen in oder zwischen Fasermaterial, insbesondere Baumwolle, weist einen Fasertransportkanal für einen Fasermaterialstrom, dem in Transportrichtung hintereinander ein Sensorsystem zum Erkennen der Fremdstoffe und mindestens eine Einrichtung zur Ausscheidung der Fremdstoffe zugeordnet ist, die eine Einrichtung zur Erzeugung eines Blasluftstromes aufweist, der in Richtung auf das Fasermaterial verläuft und den Fasermaterialstrom mit den Fremdkörpern ganz oder teilweise aus dem Fasertransportkanal ausschleust, auf. Die Einrichtung zur Erzeugung des Blasluftstroms weist eine Mehrzahl von Blasdüsen auf, die über die Breite des Fasertransportkanals angeordnet sind und an eine Druckluftleitung und an Ventile angeschlossen sind, wobei die Blasdüsen über die Ventile an die gemeinsame Druckluftleitung, die mit einer Druckluftquelle in Verbindung steht, angeschlossen sind. Der Vorrichtung ist ein Durchflusssensor zugeordnet, der den Luftdurchfluss durch die Druckluftleitung zu erfassen vermag, wobei der Durchflusssensor in der Druckluftleitung angeordnet ist.

Dadurch, dass der Vorrichtung ein Durchflusssensor zugeordnet ist, der den Luftdurchfluss durch die Druckluftleitung direkt oder indirekt zu erfassen vermag, ist es auf konstruktiv einfache Weise ermöglicht, eine Störung des Luftdurchflusses bereits während des laufenden Betriebes zu erkennen. Auf diese Art kann in kurzer Zeit die Störung behoben werden, was zu einer Steigerung der Produktivität der Vorrichtung führt.

Die Ventile können steuerbare Magnetventile sein. Der Blasluftstrom kann ein Luftstrahl sein. Die Fremdstoffe können selektiv ausgeblasen werden. Die Blasdüsen können an Orten über die Breite des Fasermaterialtransportkanals aktivierbar sein, die solchen vorgelagerten Orten entsprechen, an denen das Sensorsystem Fremdstoffe detektiert hat. Vorzugsweise ist ein kurzzeitiger Blasluftstrom aktivierbar.

In einem Wandelement des Fasermaterialtransportkanals können Öffnungen für den Durchtritt von Blasluftströmen vorhanden sein. Der Fasermaterialtransportkanal kann eine Transportleitung, respektive ein Schacht sein. Weiterhin kann vorgesehen sein, dass das Fasermaterial im Fasermaterialtransportkanal pneumatisch transportiert wird.

Die Erfindung wird nachfolgend anhand von zeichnerisch dargestellten Ausführungsbeispielen näher erläutert.

Es zeigt:
- Fig. 1: eine erfindungsgemäße Vorrichtung an einer Fremdteilerkennungs- und -ausscheidevorrichtung mit vertikalem Transportkanal,
- Fig. 2: die erfindungsgemäße Vorrichtung mit Strömungsverlauf des umgelenkten Blasluftstroms,
- Fig. 3: eine Seitenansicht des Blasdüsenbalkens an einer Faserflocken-Förderleitung.
- Fig. 4: den Blasdüsenbalken mit Düsenplatte,
- Fig. 5: schematisch einen Querschnitt durch den Blasdüsenbalken mit Düsenpatrone, Magnetventil und Magnetventilsteuerung,
- Fig. 5a: perspektivisch einen Teil des Blasdüsenbalkens für die Halterung der Blasdüsen,
- Fig. 6: schematisch eine Vorderansicht im Schnitt durch den Blasdüsenbalken,
- Fig. 7: eine Draufsicht auf eine Ausblaseinrichtung mit einer Mehrzahl von über die Breite angeordneten Blasdüsen,
- Fig. 8: die erfindungsgemäße Vorrichtung nach einem Vier-Walzenreiniger und
- Fig. 9: ein Blockschaltbild einer elektronischen Steuer- und Regeleinrichtung, an die zwei Sensorsysteme und eine Ausblaseinrichtung angeschlossen sind.

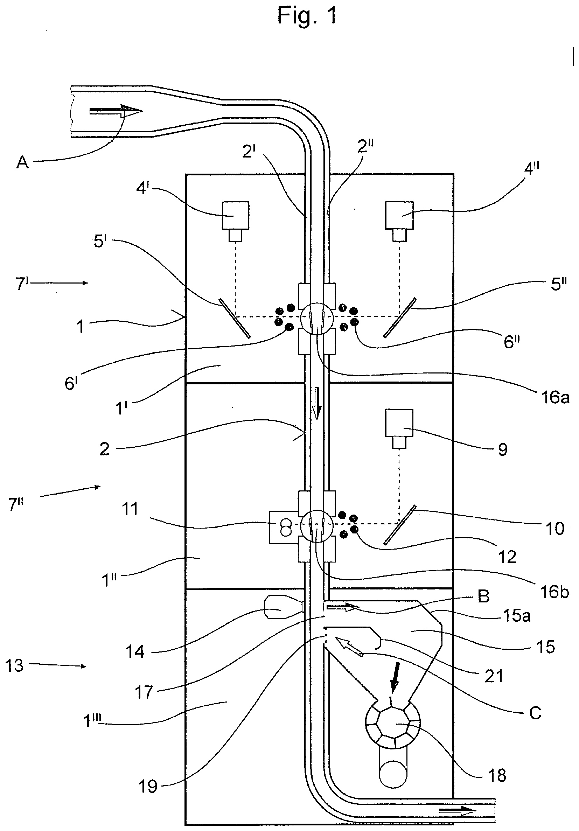

Nach Fig. 1 ist in einem Gehäuse 1 ein senkrecht angeordneter Kanal 2 vorhanden. Die einander gegenüberliegenden parallelen Seitenwände 2', 2" sind mindestens teilweise als transparente Scheiben ausgebildet. Auf den beiden Außenseiten sind den Seitenwänden 2', 2" Beleuchtungskörper zugeordnet.

Eine erste Detektionseinrichtung umfasst zwei CCD Kameras 4', 4" (Zeilenkameras), die einen Glaskanal 16a über zwei in einem Winkel angeordnete Umlenkspiegel 5' bzw. 5" indirekt beaufschlagen. Die optischen Ebenen sind etwas versetzt zueinander angeordnet. Auf der der Kamera 4' gegenüberliegenden Seite des Kanals 2 ist eine Beleuchtung 6' angeordnet, und auf der der Kamera 4" gegenüberliegenden Seite des Kanals 2 ist eine Beleuchtung 6". Das Material im Glaskanal 16a wird auf diese Weise durch die beiden Kameras 4', 4" von zwei Seiten detektiert.

Ein Gehäuse 1' umfassend den Glaskanal 16a, die Kameras 4', 4", die Umlenkspiegel 5', 5", und die Beleuchtungen 6', 6" bildet ein erstes Detektionsmodul 7'. Hier wird insbesondere farbiges Fremdmaterial in und zwischen der Baumwolle erkannt.

Unter dem ersten Detektionsmodul 7' ist ein zweites Detektionsmodul 7" vorhanden. Die Querschnitte des Kanals 2 sind gleich.

Eine zweite Detektionseinrichtung umfasst eine CCD-Kamera 9, die einen Glaskanal 16b über einen im Winkel angeordneten Umlenkspiegel 10 indirekt beaufschlagt. Auf der der Kamera 9 abgewandten Seite des Kanals 2 ist eine Beleuchtungseinrichtung 11 mit Polarisationsfiltern angeordnet, und auf der der Kamera 9 zugewandten Seite des Kanals 2 ist eine Beleuchtung 12 für UV-Licht angeordnet. Das polarisierte Licht (Durchlicht) und das infolge UV-Bestrahlung reflektierte Licht (Auflicht) werden gemeinsam von der einen CCD-Kamera 9 aufgenommen. Das Material im Glaskanal 16b wird von zwei Seiten mit Licht beaufschlagt, mit Durchlicht und mit Auflicht.

Ein Gehäuse 1" umfassend den Glaskanal 16b, die Kamera 9, den Umlenkspiegel 10, und die Beleuchtungseinrichtungen 11, 12 bildet ein zweites Detektionsmodul 7". Hier werden insbesondere helle oder transparente Kunststoffe in oder zwischen Baumwolle erkannt.

Unter dem zweiten Detektionsmodul 7" ist ein Ausscheidemodul 13 vorgesehen. Das Ausscheidemodul 13 in einem Gehäuse 1‴ umfasst eine Einrichtung 14 zur Erzeugung eines Blasluftstromes, die einer Seitenwand des Kanals 2 zugeordnet ist. Der der als Düsenleiste ausgebildeten Einrichtung 14 gegenüberliegenden Seitenwand des Kanals 2 ist ein Auffangbehälter 15 für die aus dem Förderstrom ausgeblasenen Verunreinigungen zugeordnet, der besaugt ist.

Die Wand der Fasertransportleitung 2 weist gegenüber der quer zur Fasertransportleitung 2 wirksamen Düsenleiste 14 eine erste Öffnung 17 auf, die zu dem Ausscheideraum 15 führt, der mit einer Zellradschleuse 18 als Abfuhreinrichtung verbunden ist. Blasluft B aus der Düsenleiste 14 ist in einem geschlossenen System aus dem Ausscheideraum 15 durch eine weitere Öffnung 19 in der Wand der Fasertransportleitung 2 einem Förderluftstrom A wieder zuführbar. Die weitere Öffnung 19, die stromab der ersten Öffnung 17 angeordnet ist, ist durch ein Sieb 20 verschlossen, das nur den Durchtritt der rückführenden Blasluft B gestattet. Auf diese Weise ist der Ausscheideraum 15 integral mit der Fasertransportleitung 2 verbunden.

Die Blasluft, die aus den Düsen der Düsenleiste 14 mit hoher Geschwindigkeit austritt, tritt durch eine nicht dargestellte Öffnung in der Wand der Fasertransportleitung 2 in den Innenraum der Fasertransportleitung 2 ein und durch die erste Öffnung 17 aus dem Innenraum der Fasertransportleitung 2 aus.

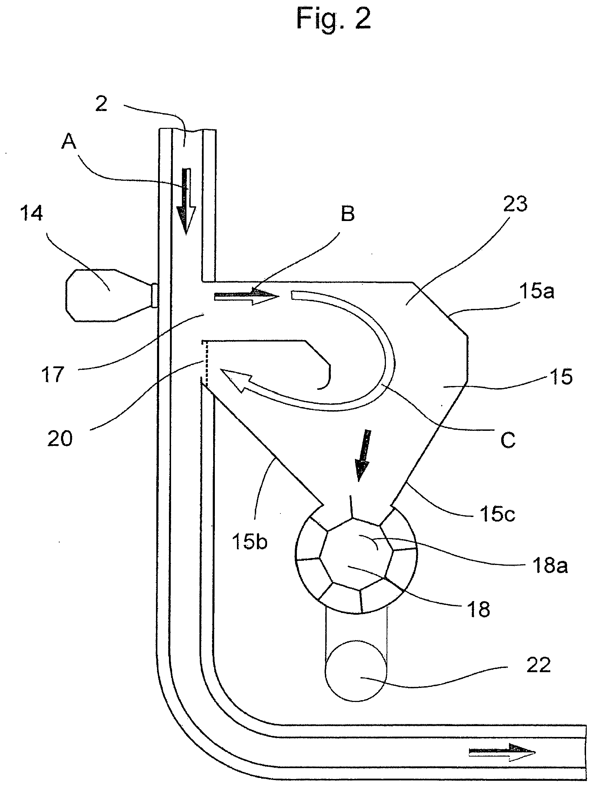

Fig. 2 zeigt eine Anordnung wie Fig. 1, in welcher die Komponenten Blasbalken 14, Förderkanal 2, Druckausgleichsieb 20 und Zellradschleuse 18 um den Abfallraum 15 angeordnet sind.

Der von den im Blasbalken 14 angeordneten Ventilen ausgelöste Druckimpuls bzw. die ausgelösten Druckimpulse fördert/n die Fremdteile und die mitgerissenen Gutfasern in den Abfallraum 15. Durch die Gestaltung des Abfallraumes 15 wird die mitströmende Luft im hinteren Bereich des Abfallraumes 15 in einen Wirbel C gezwungen, so dass die in Bewegung versetzte Luft direkt auf das an der Schachtwand des Förderkanals 2 angeordnete Druckausgleichsieb 20 trifft und dort wieder in den Kanal 2 gelangt. Zusätzlich wird durch ein Rückhalteblech 21 verhindert, dass die Luft wieder nach oben zurück in den Kanal 2 gelangen kann, so dass keine Gefahr besteht, dass Fremdteile wieder zurück in den Förderkanal 2 gespült werden. Die von dem Druckimpuls und der mitströmenden Luft in den Abfallraum 15 mitgerissenen Fremdteile als auch das Gutfasermaterial prallen entweder an der schräg stehenden vorderen Begrenzung 15a des Abfallraumes 15 ab und rutschen in die Zellradschleuse 18 oder werden direkt im unteren Teil des Wirbels C aufgrund der Schwerkraft an die Zellradschleuse 18 übergeben. Die Zellradschleuse 18 dreht kontinuierlich (Pfeil 18a) und fördert das ausgeschiedene Material in eine Abfallabsaugung 22 und erzeugt damit eine lufttechnische Trennung der Entsorgungsluft von der Förderluft im Kanal 2, so dass diese nicht aufeinander abgestimmt werden müssen.

Mit 23 ist eine kanalartige Einführung in den Abfallraum 15 bezeichnet. Das Rückhalteelement 21 ist als Leitelement für den Blasluftstrom B ausgebildet und weist ein einseitig offenes Ende auf. Im Anschluss an das offene Ende ist das Rückhalte- bzw. Leitelement 21, z. B. ein Blech, segmentförmig (oder gebogen) ausgebildet und bildet eine Wandfläche der Kanaleinführung 23. Dem segmentförmigen (oder gebogenen) Endbereich des Leitelementes 21 gegenüberliegend ist die Wandfläche 15a des Abfallraums 15 ebenfalls segmentförmig (oder gebogen) ausgebildet. Auf diese Weise wird der in den Abfallraum 15 eintretende Blasluftstrom B in eine Biegung zu dem Wirbel C gezwungen, der in Richtung der zweiten Öffnung 19 bzw. des Siebes 20 strömt. Mit 15b und 15c sind konisch in Richtung Zellradschleuse 18 zulaufende Wandflächen des Abfallraumes 15 bezeichnet.

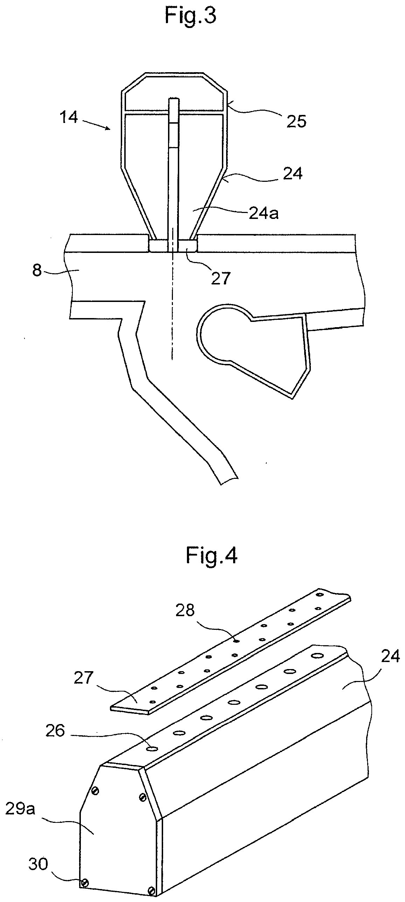

Entsprechend Fig. 3 ist die Einrichtung 14 zur Erzeugung eines Blasluftstroms einer pneumatischen Förderleitung 8 zugeordnet. Der Ausgang eines Gehäuses 24 des Blasdüsenbalkens 25 ist in Bezug auf die Förderleitung 8 in einer durchgehenden Wand-Aussparung angeordnet, die sich quer über die Breite der Förderleitung 1 erstreckt. Dem Ausgang des Gehäuses 24 mit durchgehenden Blasluftöffnungen 26 ist eine Düsenplatte 27 vorgeordnet, die gemäß Fig. 4 eine etwa dreifach größere Anzahl von Düsenöffnungen 28 im Vergleich zur Anzahl der Blasluftöffnungen 26 aufweist.

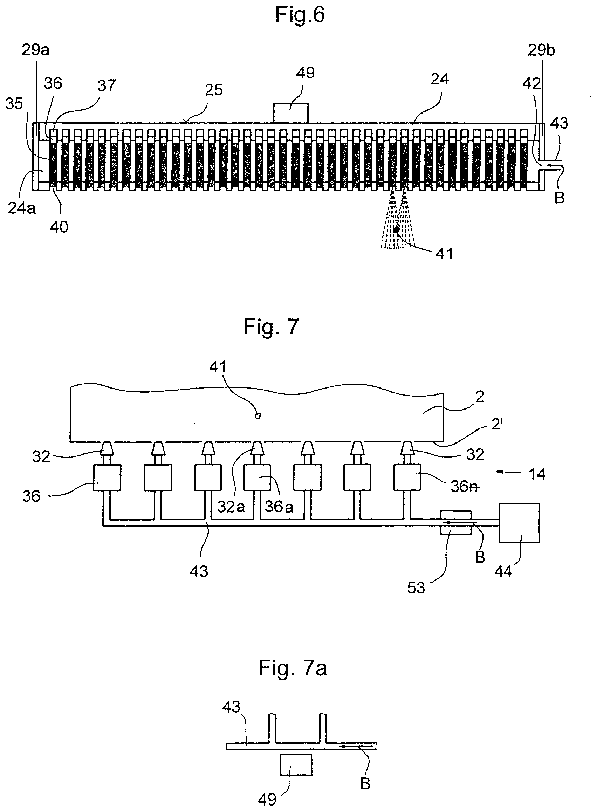

Gemäß Fig. 4 sind die beiden offenen Stirnseiten des Gehäuses 24 (Hohlprofil) durch eine jeweilige Verschlussplatte 29a bzw. 29b verschließbar. Dazu sind Schrauben 30 (nur eine Schraube bezeichnet) vorgesehen, die durch Bohrungen in den Verschlussplatten 29a bzw. 29b hindurch in Gewindebohrungen eingreifen, die an den Stirnseiten des Hohlprofils 24 in den Profilwänden vorhanden sind. Die Verschlussplatten 29a, 29b bestehen im Beispielsfall aus Aluminium. Die Verschlussplatten 29a, 29b müssen unter festem Andruck am Hohlprofil 24 befestigt sein, um eine luftdichte Abdichtung des Blasluftkanals (Hohlraum 24a) sicherzustellen. In der Verschlussplatte 29b ist eine durchgehende Öffnung 42 (Bohrung) vorhanden, an die eine Druckluftleitung 43 (sh. Fig. 6) angeschlossen ist, die zu einer (nicht dargestellten) Druckluftquelle führt.

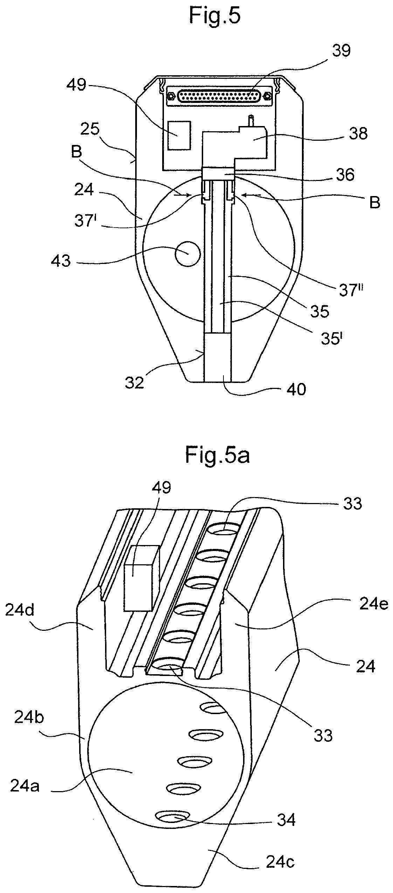

Entsprechend Fig. 5 weist der Blasdüsenbalken 25 ein Gehäuse 24 auf, in das eine Vielzahl von Blasdüsen 32 integriert ist. Das Gehäuse 24 ist gemäß Fig. 5a als Strangpresshohlprofil, z. B. aus einer Al-Mg-Legierung, ausgebildet, das den geschlossenen Hohlraum 24a einschließt, der als Druckluftkanal für die Blasdüsen 32 dient. Der Innenraum des Hohlraums 24a hat eine kreisrunde Querschnittsform. Das Hohlprofil ist durch Abtrennen, z. B. Sägen, Laserschneiden, mit einer Länge von einem (nicht dargestellten) Halbzeug-Strangpresshohlprofil hergestellt. Das Hohlprofil im Beispielsfall ist einstückig. Eine Profilwand ist mit 24b bezeichnet und weist unterschiedliche Wandstärken auf. Mit Blick auf den in den Fig. 5 und 5a gezeigten Querschnitt ist die Profilwand 24b im Bereich unterhalb des Hohlraums 24a als eine Art Ansatz 24c ausgebildet, der sich über die gesamte Länge des Gehäuses 24 erstreckt, Im Bereich seitlich oberhalb des Hohlraums 24a sind zwei parallel einander gegenüberliegende Leisten 24d, 24e vorhanden, die sich ebenfalls über die gesamte Länge des Gehäuses 24 erstrecken. In der Profilwand 24b senkrecht oberhalb der langgestreckten Mittelachse des Hohlraumes 24a ist parallel zur Mittelachse und eng nebeneinander angeordnet eine Vielzahl von durchgehenden Bohrungen 33 vorhanden, deren Anzahl der Anzahl der Blasdüsen 32 entspricht, z. B. 64 Blasdüsen. In der Profilwand 24b bzw. in dem Ansatz 24c senkrecht unterhalb der langgestreckten Mittelachse und eng nebeneinanderliegend ist eine Vielzahl von durchgehenden Bohrungen 34 vorhanden, deren Anzahl ebenfalls der Anzahl Blasdüsen 32 entspricht. Die beiden Reihen der Bohrungen 33 und 34 sind parallel zueinander ausgerichtet. Die Mittelachsen der einander jeweils gegenüberliegenden Bohrungen 33 und 34 fluchten miteinander, d. h. die einander gegenüberliegenden Bohrungen 33 und 34 sind koaxial zueinander ausgerichtet.

Die Blasdüsen 32 umfassen gemäß Fig. 5 jeweils eine Düsenpatrone 35, ein Magnetventil 36 und eine Magnetventilsteuerung 38. Jeweils eine Düsenpatrone 35 mit einem Magnetventil 36 ist durch jeweils zwei einander koaxial gegenüberliegende Bohrungen 33und 34 derart hindurchgesteckt, dass das einseitig offene Ende der Düsenpatronen 35 in eine Bohrung 33 des Ansatzes 24c eingreift und das Magnetventil 36 am anderen Ende der Düsenpatrone 35 durch eine Bohrung 34 in der Profilwand 24b durchgreift. Dabei weist ein Teil des Magnetventils 36, der im Hohlraum 24a angeordnet ist und die Profilwand 24b nach innen überragt, zwei Eintrittsöffnungen 37', 37" für Blasluft (Druckluft) auf. An dem anderen Bereich des Magnetventils 36, der außerhalb des Hohlraums 24a in der Profilwand 24b angeordnet ist, ist jeweils eine Magnetventilsteuerung 38 angebracht. Die Magnetventilsteuerungen 38 sind zwischen den Leisten 24d und 24e angeordnet. Zwischen den Leisten 24d und 24e und oberhalb der Magnetventile 36 ist ein langgestreckter Leitungskanal 39 für die elektrischen Leitungen vorhanden, an die die Magnetventilsteuerungen 38 angeschlossen sind. Die Außenwände der Düsenpatronen 35 und der Ventile 36 sind luftdicht gegen die Innenwände der Bohrungen 33 und 34abgedichtet. Auch hierdurch ist eine Fixierung der Düsenpatronen 35 und Magnetventile 36 verwirklicht. Die Magnetventile 36 sind jeweils über einen Klemmring an der Profilwand fixiert. Auf die dargestellte Weise sind die Bauelemente, die zur Erzeugung eines Blasluftstromes dienen (Druckluftkanal 24a, Düsenpatronen 35, Magnetventile 36, Magnetventilsteuerungen 38) in den Balken bzw. in das Gehäuse 24 integriert. Mit 40 ist der Ausgang eines Kanals 35' in der Düsenpatrone 35 bezeichnet. Die Düsenleiste enthält neben den einzeln ansteuerbaren Ventilen ebenfalls einen oder mehrere Sensoren 49, welche das mechanische und/oder pneumatische Öffnen und Schließen der Ventile 36 erfassen können. Geeignete Sensoren hierzu sind z. B. Beschleunigungssensoren oder aber auch Schallsensoren. Ein Beschleunigungssensor, direkt in dem Ventilkörper oder aber in dessen unmittelbarer Nähe untergebracht, kann das Öffnen bzw. Schließen des Ventils 36 durch die mechanische Erschütterung erfassen. Alternativ bieten sich Schallsensoren und hier insbesondere Körperschallsensoren an. Ein Luftschallsensor (Mikrofon) misst das Geräusch der ausströmenden Druckluft, wobei allerdings die Schallgeschwindigkeit in Luft für die Messung der Verzögerung mit einkalkuliert werden muss. Bei einem Körperschallsensor entfällt dies, da die Schallgeschwindigkeit in den typischerweise verwendeten Konstruktionsmaterialien wie Aluminium um ein Vielfaches höher ist. Je nach Größe der Düsenleiste reichen ein oder einige wenige Sensoren aus, um die Funktion der Ventile zu überwachen. Der Sensor 49, z. B. Beschleunigungssensor, ist einer Innenwand im Inneren des Gehäuses 24 zugeordnet. Die in der Figur 5a gezeigte Ausführungsform weist keinen Durchflusssensor auf, sodass es sich hierbei um keine erfindungsgemäße Ausführungsform handelt.

Nach Fig. 6 ist eine Vielzahl von Blasdüsen 32 über die Breite, z. B. 1600 mm, der Fördereinrichtung nebeneinander angeordnet in den Blasdüsenbalken integriert. Die Fördereinrichtung kann eine Öffnerwalze oder eine pneumatische Förderleitung 8 sein. Mit 41 ist ein Fremdteil bezeichnet, das durch kurzzeitige Blasluftstrahlen aus zwei nebeneinanderliegenden Blasluftdüsen selektiv ausgeblasen und entfernt wird. Der Sensor 49, z. B. Beschleunigungssensor, ist auf einer Außenwand des Gehäuses 24 angebracht.

Gemäß Fig. 7 umfasst die Ausblaseinrichtung 14 eine Mehrzahl von Blasdüsen 32, 32a, denen jeweils ein Ventil 36, 36a zugeordnet ist. Die Blasdüsen 32, 32a sind über die Ventile 36, 36a an eine gemeinsame Druckluftleitung 43 angeschlossen, die mit einer Druckluftquelle 44 in Verbindung steht. Mit 2 ist die Fasertransportleitung bezeichnet, die Eintrittsöffnungen in ihrer Wandfläche 2' für die Blasdüsen 32, 32a aufweist. Die Austrittsöffnung 17 für die Blasluftströme B in den Auffangbehälter 15 ist in Fig. 1 dargestellt. Über eine Ventilsteuerung werden die Ventile 36, 36a selektiv angesteuert, z. B. bei Vorhandensein des Fremdstoffes 41 wird das Ventil 36a kurzzeitig geöffnet, so dass ein scharfer Luftstrom mit hoher Geschwindigkeit, z. B. Mach 1, über eine kurze Dauer (Millisekunden) durch die Düse 32a austritt und den Fremdkörper 41 in den besaugten Auffangbehälter 15 (sh. Fig. 1) bläst. Die Vorrichtung enthält einen erfindungsgemäßen Durchflusssensor 53 in der Zuleitung 43, mit welchem die Durchflussmenge der Druckluft gemessen werden kann. Die Steuerung vergleicht hierbei die theoretisch aufgrund der ihr bekannten Aktivierungsrate ermittelte Durchflussmenge mit der tatsächlichen gemessenen Durchflussmenge. Zu große Abweichungen lassen dabei auf fehlerhafte Ventile schließen. Die Vorrichtung gemäß Fig. 7 kann einen weiteren Sensor 49 aufweisen, der nach Fig. 7a in einem geringen Abstand zu der Druckluftleitung 43 angeordnet ist.

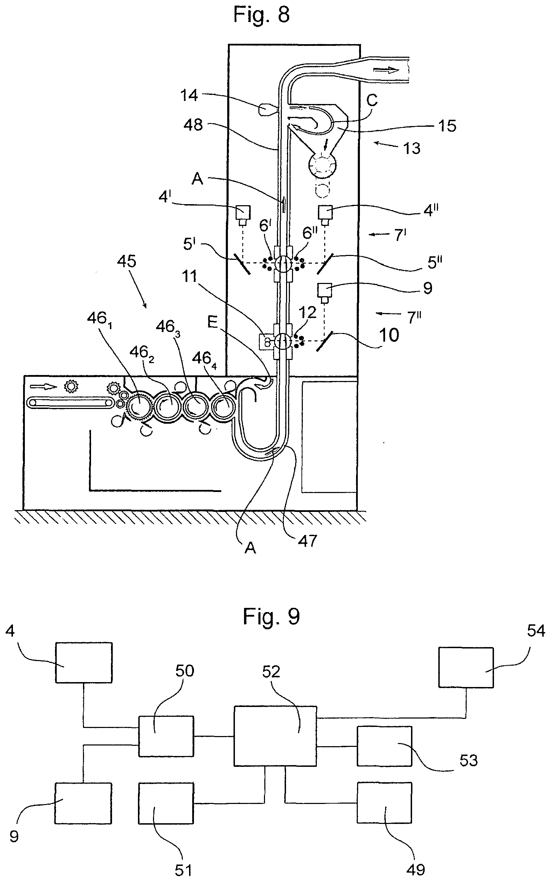

Entsprechend Fig. 8 ist die erfindungsgemäße Vorrichtung einem Reiniger 45, z. B. Trützschler CL-C4, nachgeordnet. Von der letzten schnelllaufenden garnierten Walze 46₄ wird das Fasermaterial durch einen Luftstrom E abgenommen (Luftdoffing) und gelangt als Faser-Luft-Strom A einen Kanal 47, der etwa U-förmig ausgebildet ist, dessen einer Schenkel in einen senkrechten Kanal 48 nach oben übergeht. Das Faserluftgemisch A durchströmt den Kanal 48 von unten nach oben. Dem Kanal 48 ist die erfindungsgemäße Vorrichtung zugeordnet, bestehend aus - in Materiallaufrichtung A gesehen - einem zweiten Detektionsmodul 7" (für Kunststofffremdteile), einem ersten Detektionsmodul 7' (für farbige Fremdteile) und einem Ausscheidemodul 13 (umfassend eine Ausblasvorrichtung 14, eine Absaugung und eine Rückführung der Blasluft). Das von Fremdteilen befreite Faser-Luft-Gemisch wird anschließend der weiteren Verarbeitung zugeführt.

Entsprechend Fig. 9 sind an eine elektronische Steuer- und Regeleinrichtung 52 Kameras 4, 9, eine Bildauswerteeinrichtung 50, der Sensor 49 und eine Ventilsteuerung 51 für die Ventile 36; 36a der Ausblaseinrichtung 14 angeschlossen. Die Steuer- und Regeleinrichtung 52 vergleicht hierzu die von ihr ausgehende Information zum Öffnen oder Schließen eines Ventils 36 mit der mit einer Verzögerung von wenigen Millisekunden eintreffenden Information des Sensors 49. Neben der Kontrolle des Öffnens oder Schließens, kann auch die Ansprechzeit des Ventils 36 individuell ermittelt werden. Diese Information kann mit in das Timing der Ausscheidesteuerung mit einbezogen werden, so dass insgesamt die Öffnungszeiten der Ventile 36 hinsichtlich Luftverbrauch und Abfallmenge optimiert werden können. Langsamere Ventile erfordern weniger Wartezeit zwischen dem Erkennen und Ausscheiden, schnelle Ventile entsprechend mehr. Überschreitet die gemessene Verzögerung einen Grenzwert, kann die Steuerung eine Meldung mit der Empfehlung zum Austausch geben.

### Bezugszeichenliste

- 1: Gehäuse
- 1', 1", 1‴: Gehäuse
- 2: Kanal (Fasertransportleitung)
- 2', 2": parallele Seitenwände
- 4', 4": Kameras
- 5', 5": Umlenkspiegel
- 6', 6": Beleuchtung
- 7': erstes Detektionsmodul
- 7": zweites Detektionsmodul
- 8: pneumatische Förderleitung
- 9: CCD-Kamera
- 10: Umlenkspiegel
- 11: Beleuchtungseinrichtung
- 12: Beleuchtung
- 13: Ausscheidemodul
- 14: Einrichtung zur Erzeugung eines Blasluftstrom (Ausblaseinrichtung)
- 15: Auffangbehälter
- 15a: vordere Begrenzung
- 15b: konische Wandfläche
- 15c: konische Wandfläche
- 16a: Glaskanal
- 16b: Glaskanal
- 17: erste Öffnung
- 18: Zellradschleuse
- 18a: Drehrichtung der Zellradschleuse
- 19: weitere Öffnung
- 20: Sieb
- 21: Rückhalteblech
- 22: Abfallabsaugung
- 23: kanalartige Einführung
- 24: Gehäuse (Hohlprofil)
- 24a: Hohlraum (Druckluftkanal)
- 24b: Profilwand
- 24c: Ansatz
- 24d: Leiste
- 24e: Leiste
- 25: Blasdüsenbalken
- 26: Blasluftöffnungen
- 27: Düsenplatte
- 28: Düsenöffnungen
- 29a, 29b: Verschlussplatte
- 30: Schrauben
- 32, 32a: Blasdüsen
- 33: Bohrung
- 34: Bohrung
- 35a: Düsenpatrone
- 35': Kanal
- 36; 36a: Magnetventil
- 37', 37": Eintrittsöffnungen für Blasluft
- 38: Magnetventilsteuerung
- 39: Leitungskanal
- 40: Ausgang
- 41: Fremdteil
- 42: durchgehende Öffnung
- 43: Druckluftleitung
- 44: Druckluftquelle
- 45: Reiniger
- 46₁ bis 46₄: Walzen
- 47: Kanal
- 48: Kanal
- 49: Sensor
- 50: Bildauswerteeinrichtung
- 51: Ventilsteuerung
- 52: Steuer- und Regeleinrichtung
- 53: Durchflusssensor
- 54: Sollwertspeicher
- A: Förderluftstrom
- B: Blasluft
- C: Wirbel
- E: Luftstrom

## Patentansprüche

1. Vorrichtung für eine Spinnereivorbereitungsmaschine oder eine Maschine im Ginprozess zum Erkennen und Ausscheiden von Fremdstoffen in oder zwischen Fasermaterial, insbesondere Baumwolle, mit einem Fasertransportkanal (2) für einen Fasermaterialstrom, dem in Transportrichtung hintereinander ein Sensorsystem zum Erkennen der Fremdstoffe und mindestens eine Einrichtung (13) zur Ausscheidung der Fremdstoffe zugeordnet ist, die eine Einrichtung (14) zur Erzeugung eines Blasluftstromes aufweist, der in Richtung auf das Fasermaterial verläuft und den Fasermaterialstrom mit den Fremdkörpern ganz oder teilweise aus dem Fasertransportkanal (2) ausschleust, wobei die Einrichtung (14) zur Erzeugung des Blasluftstroms eine Mehrzahl von Blasdüsen (32a bis 32n) aufweist, die über die Breite des Fasertransportkanals (2) angeordnet sind und an eine gemeinsame Druckluftleitung (43) und an Ventile (36a bis 36n) angeschlossen sind, wobei die Blasdüsen (32a bis 32n) über die Ventile (36a bis 36n) an die gemeinsame Druckluftleitung (43), die mit einer Druckluftquelle (44) in Verbindung stehen kann, angeschlossen sind, **dadurch gekennzeichnet, dass** der Vorrichtung ein Durchflusssensor (53) zugeordnet ist, der den Luftdurchfluss durch die gemeinsame Druckluftleitung (43) zu erfassen vermag, wobei der Durchflusssensor (53) in der gemeinsamen Druckluftleitung (43) angeordnet ist.

2. Vorrichtung nach Anspruch 1, **dadurch gekennzeichnet, dass** der Durchflusssensor (53) an eine elektronische Steuer- und Regeleinrichtung (52) angeschlossen ist, wobei der aktuelle Luftdurchfluss mit einem Sollwert vergleichbar ist.

3. Vorrichtung nach Anspruch 2, **dadurch gekennzeichnet, dass** die Ventile (36a bis 36n) an die elektronische Steuer- und Regeleinrichtung (52) angeschlossen sind.

4. Vorrichtung nach Anspruch 2 oder 3, **dadurch gekennzeichnet, dass** ein Sollwertspeicher an die elektronische Steuer- und Regeleinrichtung (52) angeschlossen ist.

5. Vorrichtung nach einem der Ansprüche 2 bis 4, **dadurch gekennzeichnet, dass** eine Anzeigeeinrichtung für den Luftdurchfluss an die elektronische Steuer- und Regeleinrichtung (52) angeschlossen ist.

6. Vorrichtung nach einem der Ansprüche 2 bis 5, **dadurch gekennzeichnet, dass** das Sensorsystem zur Erfassung der Fremdstoffe an die elektronische Steuer- und Regeleinrichtung (52) angeschlossen ist.

7. Vorrichtung nach einem der Ansprüche 1 bis 6, **dadurch gekennzeichnet, dass** ein Balken (25) für die Halterung der Blasdüsen (32a bis 32n) vorhanden ist.

8. Vorrichtung nach Anspruch 7, **dadurch gekennzeichnet, dass** der Balken (25) ein Gehäuse (24) mit Wandelementen (24d, 24e) ist.

9. Vorrichtung nach Anspruch 8, **dadurch gekennzeichnet, dass** der Innenraum des Gehäuses (24) hohl ist.

10. Vorrichtung nach Anspruch 8 oder 9, **dadurch gekennzeichnet, dass** das Gehäuse (24) ein Hohlprofil aus Aluminium umfasst.

11. Vorrichtung nach einem der Ansprüche 8 bis 10, **dadurch gekennzeichnet, dass** die Druckluftleitung (43) im Innenraum des Gehäuses (24) angeordnet ist.

12. Vorrichtung nach einem der Ansprüche 8 bis 11, **dadurch gekennzeichnet, dass** die Ventile (36a bis 36n) im Innenraum des Gehäuses (24) angeordnet sind.

13. Vorrichtung nach einem der Ansprüche 8 bis 12, **dadurch gekennzeichnet, dass** die Blasdüsen (32a bis 32n) an einer Außenwand des Gehäuses (24) angeordnet sind.

14. Vorrichtung nach einem der Ansprüche 8 bis 13, **dadurch gekennzeichnet, dass** die Ventile (36a bis 36n) an einer Außenwand des Gehäuses (24) angeordnet sind.

15. Vorrichtung nach einem der Ansprüche 8 bis 14, **dadurch gekennzeichnet, dass** die Längsachse des Balkens (25) parallel zu der Wandfläche des Fasertransportkanals (2) verläuft.

16. Vorrichtung nach einem der Ansprüche 1 bis 6, **dadurch gekennzeichnet, dass** eine Düsenleiste (14) für die Halterung der Blasdüsen (32a bis 2n) vorhanden ist.

17. Vorrichtung nach Anspruch 16, **dadurch gekennzeichnet, dass** die Düsenleiste (14) mindestens einen Sensor (49) enthält.

18. Vorrichtung nach Anspruch 17, **dadurch gekennzeichnet, dass** der Sensor (49) einer Innenwand im Inneren eines Gehäuses (24) zugeordnet ist.

19. Vorrichtung nach Anspruch 17, **dadurch gekennzeichnet, dass** der Sensor (49) einer Außenwand eines Gehäuses (24) zugeordnet ist.

20. Vorrichtung nach einem der Ansprüche 17 bis 19, **dadurch gekennzeichnet, dass** der mindestens eine Sensor (49) das mechanische und/oder pneumatische Öffnen und Schließen der Ventile zu erfassen vermag.

21. Vorrichtung nach Anspruch 17 bis 20, **dadurch gekennzeichnet, dass** der Sensor (49) ein Beschleunigungssensor ist.

22. Vorrichtung nach Anspruch 21, **dadurch gekennzeichnet, dass** der Beschleunigungssensor (49) direkt in einem Ventilkörper des jeweiligen Ventils (36a bis 36n) zur Erfassung der mechanischen Erschütterung untergebracht ist.

23. Vorrichtung nach einem der Ansprüche 17 bis 20, **dadurch gekennzeichnet, dass** der Sensor (49) ein Schallsensor ist.

24. Vorrichtung nach Anspruch 23, **dadurch gekennzeichnet, dass** der Schallsensor (49) ein Körperschallsensor ist.

25. Vorrichtung nach Anspruch 23, **dadurch gekennzeichnet, dass** der Schallsensor (49) ein Luftschallsensor, z. B. Mikrofon, ist, der das Geräusch der ausströmenden Druckluft zu messen vermag.

26. Vorrichtung nach Anspruch 2 und einem der Ansprüche 3 bis 25, **dadurch gekennzeichnet, dass** die elektronische Steuer- und Regeleinrichtung (52) die von ihr ausgehende Information zum Öffnen oder Schließen des jeweiligen Ventils (36a bis 36n) mit der mit einer Verzögerung von wenigen Millisekunden eintreffenden Information des Sensors (49, 53) zu vergleichen vermag.

27. Vorrichtung nach Anspruch 26, **dadurch gekennzeichnet, dass** eine Ansprechzeit des jeweiligen Ventils (36a bis 36n) individuell ermittelbar ist.

28. Vorrichtung nach Anspruch 27, **dadurch gekennzeichnet, dass** die Ansprechzeit einbeziehbar ist, so dass insgesamt die Öffnungszeiten der Ventile (36a bis 36n) hinsichtlich Luftverbrauch und Abfallmenge optimierbar sind.

29. Vorrichtung nach einem der Ansprüche 26 bis 28, **dadurch gekennzeichnet, dass** die Überschreitung eines Grenzwertes durch die gemessene Verzögerung eine Meldung der Steuer- und Regeleinrichtung (52) mit der Empfehlung zum Austausch auslöst.

30. Vorrichtung nach Anspruch 2 und einem der Ansprüche 3 bis 29, **dadurch gekennzeichnet, dass** die elektronische Steuer- und Regeleinrichtung (52) die theoretisch aufgrund der ihr bekannten Aktivierungsrate ermittelte Durchflussmenge mit der tatsächlichen gemessenen Durchflussmenge zu vergleichen vermag.

## Claims

1. Apparatus for a spinning room preparation machine or a machine in the ginning process for the detection and separation of foreign matter in or between fibre material, especially cotton, having a fibre transport channel (2) for a fibre material flow, with which there is associated in transport direction one after the other a sensor system for detecting the foreign matter and at least one device (13) for separating the foreign matter, the latter device having a device (14) for generating a blowing air flow which runs in the direction towards the fibre material and discharges the fibre material flow with the foreign parts completely or partly out of the fibre transport channel (2), wherein the device (14) for generating the blowing air flow having a plurality of blowing nozzles (32a to 32n) which are arranged across the width of the fibre transport channel (2) and are connected to a common compressed-air line (43) and to valves (36a to 36n), the blowing nozzles (32a to 32n) being connected *via* the valves (36a to 36n) to the common compressed-air line (43), which can be connected to a compressed-air source (44), **characterised in that** a flow sensor (53) is associated with the apparatus, which flow sensor is able to detect the flow of air through the common compressed-air line (43), the flow sensor (53) being arranged in the common compressed-air line (43).

2. Apparatus according to claim 1, **characterised in that** the flow sensor (53) is connected to an electronic control and regulation device (52), the instantaneous flow of air being able to be compared with a desired value.

3. Apparatus according to claim 2, **characterised in that** the valves (36a to 36n) are connected to the electronic control and regulation device (52).

4. Apparatus according to claim 2 or 3, **characterised in that** a desired value memory is connected to the electronic control and regulation device (52).

5. Apparatus according to any one of claims 2 to 4, **characterised in that** a display device for the flow of air is connected to the electronic control and regulation device (52).

6. Apparatus according to any one of claims 2 to 5, **characterised in that** the sensor system for detecting the foreign matter is connected to the electronic control and regulation device (52).

7. Apparatus according to any one of claims 1 to 6, **characterised in that** there is a beam (25) for mounting the blowing nozzles (32a to 32n).

8. Apparatus according to claim 7, **characterised in that** the beam (25) is a housing (24) having wall elements (24d, 24e).

9. Apparatus according to claim 8, **characterised in that** the interior of the housing (24) is hollow.

10. Apparatus according to claim 8 or 9, **characterised in that** the housing (24) comprises a hollow profile made of aluminium.

11. Apparatus according to any one of claims 8 to 10, **characterised in that** the compressed-air line (43) is arranged in the interior of the housing (24).

12. Apparatus according to any one of claims 8 to 11, **characterised in that** the valves (36a to 36n) are arranged in the interior of the housing (24).

13. Apparatus according to any one of claims 8 to 12, **characterised in that** the blowing nozzles (32a to 32n) are arranged on an outer wall of the housing (24).

14. Apparatus according to any one of claims 8 to 13, **characterised in that** the valves (36a to 36n) are arranged on an outer wall of the housing (24).

15. Apparatus according to any one of claims 8 to 14, **characterised in that** the longitudinal axis of the beam (25) runs parallel to the wall surface of the fibre transport channel (2).

16. Apparatus according to any one of claims 1 to 6, **characterised in that** there is a nozzle bar (14) for mounting the blowing nozzles (32a to 32n).

17. Apparatus according to claim 16, **characterised in that** the nozzle bar (14) contains at least one sensor (49).

18. Apparatus according to claim 17, **characterised in that** the sensor (49) is associated with an inner wall in the interior of a housing (24).

19. Apparatus according to claim 17, **characterised in that** the sensor (49) is associated with an outer wall of a housing (24).

20. Apparatus according to any one of claims 17 to 19, **characterised in that** the at least one sensor (49) is able to detect the mechanical and/or pneumatic opening and closing of the valves.

21. Apparatus according to claim 17 to 20, **characterised in that** the sensor (49) is an acceleration sensor.

22. Apparatus according to claim 21, **characterised in that** the acceleration sensor (49) is accommodated directly in a valve part of the respective valve (36a to 36n) to detect the mechanical vibration.

23. Apparatus according to any one of claims 17 to 20, **characterised in that** the sensor (49) is an acoustic sensor.

24. Apparatus according to claim 23, **characterised in that** the acoustic sensor (49) is a solid-borne sound sensor.

25. Apparatus according to claim 23, **characterised in that** the acoustic sensor (49) is an air-borne sound sensor, for example microphone, which is able to measure the sound of the outflowing compressed air.

26. Apparatus according to claim 2 and any one of claims 3 to 25, **characterised in that** the electronic control and regulation device (52) is able to compare the information outgoing from it for opening or closing the respective valve (36a to 36n) with the information from the sensor (49, 53) incoming with a delay of a few milliseconds.

27. Apparatus according to claim 26, **characterised in that** a response time of the respective valve (36a to 36n) can be determined individually.

28. Apparatus according to claim 27, **characterised in that** the response time can be taken into account so that overall the opening times of the valves (36a to 36n) can be optimised in respect of air consumption and amount of waste.

29. Apparatus according to any one of claims 26 to 28, **characterised in that** the exceedance of a limit value by the measured delay triggers a message of the control and regulation device (52) with the recommendation for replacement.

30. Apparatus according to claim 2 and any one of claims 3 to 29, **characterised in that** the electronic control and regulation device (52) is able to compare the rate of flow determined theoretically on the basis of the activation rate known to it with the rate of flow actually measured.

## Revendications

1. Dispositif destiné à une machine de préparation à la filature ou une machine d'égrenage destiné à détecter et séparer des corps étrangers situés dans ou entre une matière fibreuse, en particulier du coton, ledit dispositif comprenant un conduit de transport de fibres (2) qui est destiné à un flux de matière fibreuse et qui est associé successivement dans la direction de transport à un système de capteurs destiné à détecter les corps étrangers et à au moins une unité (13) de séparation des corps étrangers qui comporte une unité (14) de génération d'un flux d'air soufflé qui s'étend dans la direction de la matière fibreuse et évacue le flux de matière fibreuse pourvu des corps étrangers complètement ou partiellement du conduit de transport de fibres (2), l'unité (14) de génération du flux d'air soufflé comportant une pluralité de buses de soufflage (32a à 32n) qui sont disposées sur la largeur du conduit de transport de fibres (2) et qui sont raccordées à une conduite d'air comprimé commune (43) et à des vannes (36a à 36n), les buses de soufflage (32a à 32n) étant raccordées par le biais des vannes (36a à 36n) à la conduite d'air comprimé commune (43) qui peut être reliée à une source d'air comprimé (44), **caractérisé en ce que** le dispositif est associé à un capteur de débit (53) qui est apte à détecter le débit d'air à travers la conduite d'air comprimé commune (43), le capteur de débit (53) étant disposé dans la conduite d'air comprimé commune (43).

2. Dispositif selon la revendication 1, **caractérisé en ce que** le capteur de débit (53) est raccordé à une unité de commande et de régulation électronique (52), le débit d'air actuel étant comparable à une valeur cible.

3. Dispositif selon la revendication 2, **caractérisé en ce que** les vannes (36a à 36n) sont raccordées à l'unité de commande et de régulation électronique (52).

4. Dispositif selon la revendication 2 ou 3, **caractérisé en ce qu'**une mémoire de valeur cible est raccordée à l'unité de commande et de régulation électronique (52).

5. Dispositif selon l'une des revendications 2 à 4, **caractérisé en ce qu'**une unité d'affichage du débit d'air est raccordée à l'unité de commande et de régulation électronique (52).

6. Dispositif selon l'une des revendications 2 à 5, **caractérisé en ce que** le système de capteurs destiné à détecter les corps étrangers est raccordé à l'unité de commande et de régulation électronique (52).

7. Dispositif selon l'une des revendications 1 à 6, **caractérisé en ce qu'**une barre (25) est prévue pour maintenir les buses de soufflage (32a à 32n).

8. Dispositif selon la revendication 7, **caractérisé en ce que** la barre (25) est un boîtier (24) pourvu d'éléments de paroi (24d, 24e).

9. Dispositif selon la revendication 8, **caractérisé en ce que** l'espace intérieur du boîtier (24) est creux.

10. Dispositif selon la revendication 8 ou 9, **caractérisé en ce que** le boîtier (24) comprend un profilé creux en aluminium.

11. Dispositif selon l'une des revendications 8 à 10, **caractérisé en ce que** la conduite d'air comprimé (43) est disposée dans l'espace intérieur du boîtier (24).

12. Dispositif selon l'une des revendications 8 à 11, **caractérisé en ce que** les vannes (36a à 36n) sont disposées dans l'espace intérieur du boîtier (24).

13. Dispositif selon l'une des revendications 8 à 12, **caractérisé en ce que** les buses de soufflage (32a à 32n) sont disposées sur une paroi extérieure du boîtier (24).

14. Dispositif selon l'une des revendications 8 à 13, **caractérisé en ce que** les vannes (36a à 36n) sont disposées sur une paroi extérieure du boîtier (24).

15. Dispositif selon l'une des revendications 8 à 14, **caractérisé en ce que** l'axe longitudinal de la barre (25) est parallèle à la surface de paroi du conduit de transport de fibres (2).

16. Dispositif selon l'une des revendications 1 à 6, **caractérisé en ce qu'**une rampe de buses (14) est prévue pour maintenir les buses de soufflage (32a à 32n).

17. Dispositif selon la revendication 16, **caractérisé en ce que** la rampe à buses (14) contient au moins un capteur (49).

18. Dispositif selon la revendication 17, **caractérisé en ce que** le capteur (49) est associé à une paroi intérieure à l'intérieur d'un boîtier (24).

19. Dispositif selon la revendication 17, **caractérisé en ce que** le capteur (49) est associé à une paroi extérieure d'un boîtier (24).

20. Dispositif selon l'une des revendications 17 à 19, **caractérisé en ce que** l'au moins un capteur (49) est apte à détecter l'ouverture et la fermeture mécaniques et/ou pneumatiques des vannes.

21. Dispositif selon la revendication 17 à 20, **caractérisé en ce que** le capteur (49) est un capteur d'accélération.

22. Dispositif selon la revendication 21, **caractérisé en ce que** le capteur d'accélération (49) est monté directement dans un corps de vanne de la vanne respective (36a à 36n) pour détecter la vibration mécanique.

23. Dispositif selon l'une des revendications 17 à 20, **caractérisé en ce que** le capteur (49) est un capteur acoustique.

24. Dispositif selon la revendication 23, **caractérisé en ce que** le capteur acoustique (49) est un capteur de bruit de structure.

25. Dispositif selon la revendication 23, **caractérisé en ce que** le capteur acoustique (49) est un capteur de son aérien, par exemple un microphone, qui est apte à mesurer le bruit de l'air comprimé sortant.

26. Dispositif selon la revendication 2 et l'une des revendications 3 à 25, **caractérisé en ce que** l'unité de commande et de régulation électronique (52) est apte à comparer l'information qu'il délivre relative à l'ouverture ou la fermeture de la vanne respective (36a à 36n) avec l'information du capteur (49, 53) qui entre avec un retard de quelques millisecondes.

27. Dispositif selon la revendication 26, **caractérisé en ce qu'**un temps de réponse de la vanne respective (36a à 36n) peut être déterminé individuellement.

28. Dispositif selon la revendication 27, **caractérisé en ce que** le temps de réponse peut être inclus de manière à pouvoir optimiser globalement les temps d'ouverture des vannes (36a à 36n) en termes de consommation d'air et de quantité de rejet.

29. Dispositif selon l'une des revendications 26 à 28, **caractérisé en ce que**, lorsque le retard mesuré dépasse une valeur limite, un message de l'unité de commande et de régulation (52) est déclenché avec la recommandation de remplacement.

30. Dispositif selon la revendication 2 et l'une des revendications 3 à 29, **caractérisé en ce que** l'unité de commande et de régulation électronique (52) est apte à comparer le débit, déterminé théoriquement sur la base du débit d'activation qui lui est connu, avec le débit réellement mesuré.
